Europäisches Patentamt

European Patent Office

Office européen des brevets

(19)

(11) Veröffentlichungsnummer: **0 305 679 B1**

(12) **EUROPÄISCHE PATENTSCHRIFT**

(45) Veröffentlichungstag der Patentschrift: **14.08.91**

(51) Int. Cl.5: **E01F 9/04**

(21) Anmeldenummer: **88110428.5**

(22) Anmeldetag: **30.06.88**

(54) Markierungsmaterial für Verkehrsflächen sowie Verfahren und Vorrichtung zu dessen Herstellung.

(30) Priorität: **02.09.87 DE 3729302**

(43) Veröffentlichungstag der Anmeldung:
**08.03.89 Patentblatt 89/10**

(45) Bekanntmachung des Hinweises auf die
Patenterteilung:
**14.08.91 Patentblatt 91/33**

(84) Benannte Vertragsstaaten:
**AT BE CH DE FR GB LI NL SE**

(56) Entgegenhaltungen:
**AT-B- 285 649**
**FR-A- 1 120 653**
**FR-A- 2 244 054**
**FR-A- 2 358 370**
**GB-A- 2 087 404**

(73) Patentinhaber: **H. Lafrentz GmbH & Co.**
**Pinkertweg 47**
**W-2000 Hamburg 74(DE)**

(72) Erfinder: **Michalski, Christian, Dr.**
**Moorkampshöhe 18**
**W-2084 Rellingen(DE)**

(74) Vertreter: **Meyer, Ludgerus et al**
**Patentanwälte Meyer, Stach, Vonnemann**
**Jungfernstieg 38**
**W-2000 Hamburg 36(DE)**

## Beschreibung

Die Erfindung betrifft ein Verfahren zur Herstellung eines rieselfähigen Markierungsmaterials für Verkehrsflächen, bei welchem man ein in der Hitze fließfähiges Bindemittel mit einem Gehalt an Natur- und/oder Kunstharz sowie gegebenenfalls Weichmacher und/oder Elastomeren in schmelzflüssiger Form mit Pigment vermischt und die erhaltene pigmenthaltige Bindemittelmischung in vorbestimmtem Mengenverhältnis mit einer getrennt erzeugten Zuschlagmischung aus mineralischen Stoffen sowie gegebenenfalls Glasperlen vermischt, sowie Vorrichtungen zur Herstellung dieses Markierungsmaterials.

Aus der FR-A-2 244 054 ist ein Markierungsmaterial für Verkehrsflächen in Form einer rieselfähigen Mischung aus mineralischen Füllstoffen, Pigment und in der Hitze fließfähigem Bindemittel mit einem Gehalt an schmelzbaren Harzen sowie Elastomeren bekannt, wobei die Mischung gegebenenfalls noch reflektierende Perlen enthält. Das Bindemittel liegt darin in Form von Granulatkörnern einer schmelzflüssig aufgeschlossenen, pigmenthaltigen Mischung der Bindemittelkomponenten vor.

Aus der DE-C-29 41 802 ist eine Vorrichtung zum Auspressen von fließfähigen Massen bekannt, die mit einem zylindrischen, drehbaren Behälter mit auf seinem Umfang verteilt angeordneten Durchtrittsöffnungen für die dem Behälter axial zugeführten Massen versehen und oberhalb eines Transport- oder Kühlbandes angeordnet ist. Das Auspressen erfolgt mit einem weiteren zylindrischen Körper, der an der Innenwandung des ersten Behälters geführt und mit dem Transportband zugewandten Öffnungen versehen ist, die bei Relativbewegung der beiden Behälter zyklisch mit den Öffnungen des ersten Behälters zur Deckung kommen. Die ausgepreßten Massen fallen auf das Kühlband, auf dem sie anschließend erstarren.

Grundsätzlich ist eine derartige Vorrichtung zum Herstellen einzelner portionierter Teilmengen des Bindemittels verwendbar. Nachteilig an diesem bekannten Verfahren ist jedoch, daß über einen längeren Zeitraum kein störungsfreier Betrieb möglich ist. Durch die im Bindemittel eingearbeiteten Stoffe, insbesondere durch das eingearbeitete Pigment ($TiO_2$) verschleißen die Werkzeuge sehr schnell, so daß eine längere Abdichtung der sich relativ zueinander bewegenden Öffnungen nicht sichergestellt werden kann.

Aufgabe der Erfindung ist es deshalb, ein Verfahren anzugeben, das geeignet ist, bei geringem Werkzeugverschleiß und geringer Störneigung ein rieselfähiges Markierungsmaterial für Verkehrsflächen herzustellen sowie eine Vorrichtung zur Durchführung des Verfahrens.

Diese Aufgabe wird dadurch gelöst, daß man die schmelzflüssige pigmenthaltige Bindemittelmischung durch Gasstrahlimpulse in eine Vielzahl tropfenartiger Teilchen überführt, diese getrennt zu pastillenartigen Teilchen erstarren läßt und diese mit der Zuschlag-Mischung vermischt.

Eine Vorrichtung zur Durchführen des erfindungsgemäßen Verfahrens ist in Anspruch 8 beschrieben.

Vorteilhaft ist dabei, daß die Überführung der schmelzflüssigen, pigmenthaltigen Bindemittelmischung in tropfenartige Teilchen durch Druckgasimpulse erfolgt. Somit kann auf verschleißende mechanische Teile verzichtet werden. Auch über lange Zeiträume kann selbst ein Stoff, der in einem breiten Temperaturbereich erweicht, betriebssicher in einzelne tropfenartige Teilmengen überführt werden. Danach werden die einzelnen Teilmengen getrennt voneinander bis zum Erstarren gekühlt. Durch die Trennung dieser Teilmengen wird das erneute Verschweißen vermieden. Das Vermischen der erstarrten Teilchen mit der Zuschlagmischung verhindert, daß bei längerer Lagerung die einzelnen Teilmengen wieder miteinander versintern.

Vorteilhafte weitere Ausgestaltungen dieses Verfahrens sind in den Unteransprüchen 2 bis 7 beschrieben, und bevorzugte Ausgestaltungen dieser Vorrichtung sind in den Unteransprüchen 9 bis 12 beschrieben.

Durch Umwälzen der schmelzflüssigen, pigmenthaltigen Bindemittelmischung wird ein hinreichendes Aufschließen der Komponenten und damit eine Homogenisierung erreicht.

Die Kühlung der auf der Aufnahmefläche befindlichen tropfenartigen Teilchen beschleunigt das Erstarren zu handhabbaren Pastillen und dient damit der Produktivitätssteigerung.

Das Bepudern der erstarrten Pastillen mit deren Haftneigung herabsetzenden Pulver vermindert die Sinterneigung.

Wird die aus den Füll-, Zuschlagstoffen und gegebenfalls Glasperlen bestehende Mischung mit einer entmischungshemmenden, oberflächenaktiven Flüssigkeit besprüht, kann das rieselfähige Markierungsmaterial auch nach längerer Lagerung und Transporten ohne erneutes Durchmischen verarbeitet werden.

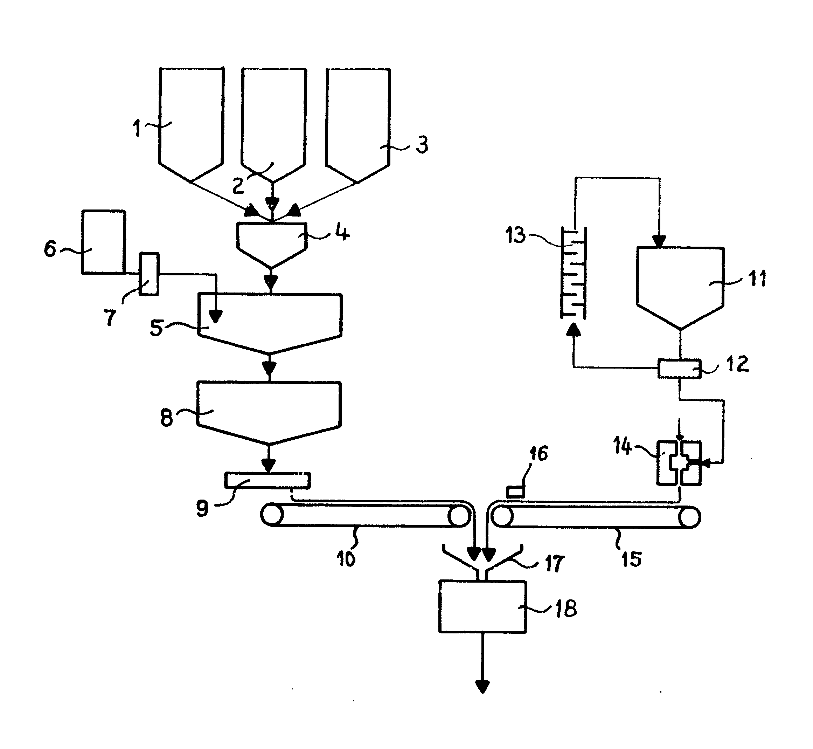

Im folgenden wird eine bevorzugte Ausführungsform der erfindungsgemäßen Vorrichtung unter Bezugnahme auf die beigefügte Zeichnung weiter erläutert.

Diese zeigt ein schematisches Fließbild einer Anlage zur Herstellung eines rieselfähigen Markierungsmaterials mit einem Glasperlen-Silo 1, einem Füllstoff-Silo 2 und einem Quarzsand-Silo 3, aus denen die entsprechenden Materialien über Förderschnecken und eine Chargenwaage 4 in einen Chargenmischer 5 eingeführt und darin vermischt werden. Aus einem Vorratsbehälter 6 für eine oberflächenaktive Flüssigkeit wird diese über eine Dosierpumpe 7 in den Chargenmischer 5 eindosiert. Nach gründlichem Durchmischen gelangt die erzeugte Mischung in einen Puffer-Silo 8, aus dem sie über eine Bandwaage 9 auf ein Transportband 10 ausgetragen wird.

Parallel dazu werden in einem Schmelzkessel 11 mit beheizbarem Rührwerk die für das Bindemittel benötigten Komponenten, nämlich schmelzbares Natur- und/oder Kunstharz sowie je nach der Rezeptur gegebenenfalls Elastomere, Plastomere und/oder Weichmacher eingebracht. Diese Komponenten werden dann im Schmelzkessel erhitzt und zu einem schmelzflüssigen Bindemittel vermischt, in das dann die benötigten Pigmente, wie beispielsweise Titanweiß, Chromgelb, etc. eingetragen wird. Die so erhaltene, pigmenthaltige Bindemittelmischung wird dann über eine Umwälzpumpe 12 und einem statischen Mischer 13 hinreichende Zeit im Kreislauf umgewälzt, bis die Pigmente, Elastomeren, etc. hinreichend aufgeschlossen sind. Danach wird die fertige schmelzflüssige Bindemittelmischung durch die auf Dosierbetrieb umgeschaltete Umwälzpumpe 12 einer nachgeschalteten Zerteilvorrichtung 14 zugeführt und durch diese in eine Vielzahl von auf ein darunter angeordnetes, mit Kühleinrichtungen versehenes Transportband 15 aufgebrachten tropfenartigen Bindemittelteilchen zerteilt, die bei der Fortbewegung des Transportbandes 15 gekühlt werden und dabei zu getrennten pastillenartigen Teilchen erstarren, die kurz vor dem Ende des Transportbandes noch durch eine darüber angeordnete Vorrichtung 16 mit Kalksteinmehl bepudert werden, um ein Zusammenkleben zu vermeiden.

Vom Ende des mit vorbestimmter Geschwindigkeit umlaufenden Transportbandes 15 fallen die bepuderten, pastillenartigen Teilchen sowie die vom Ende des Transportbandes 10 herabfallende, mit einer oberflächenaktiven Flüssigkeit benetzte Mischung aus Glasperlen, mineralischem Füllstoff und Sand gemeinsam in einen Auffangtrichter 17 eines nachgeschalteten Mischers 18, in welchem sie gründlich zu einer homogenen Mischung vermischt werden, die dann üblichen, nicht dargestellten Absackvorrichtungen zum Abfüllen in Polyethylensäcke zugeführt wird.

## Ausführungsbeispiel

Zur Herstellung einer Markierungs-Pulvermasse wurden in der in der Zeichnung dargestellten Vorrichtung aus dem Glasperlen-Silo 1 über eine Förderschnecke 300 kg Glasperlen, aus dem Füllstoff-Silo 2 über eine Förderschnecke 200 kg Quarzmehl und aus dem Sand-Silo 3 über eine Förderschnecke 200 kg Quarzsand nacheinander in die Chargenwaage 4 zugewogen und das Gemisch aus Glasperlen, Quarzmehl und Quarzsand dann in den Chargenmischer 8 eingegeben und darin vermischt. Während des Mischvorganges wurden aus dem Vorratsbehälter 6 über die Dosierpumpe 7 7 1 einer zehnprozentigen Lösung von N-Alkoxypropyl-propylendiamin zudosiert. Nach dem Homogenisieren wurde das mit Tensid benetzte Feststoffgemisch in den Puffersilo 8 überführt und aus diesem über die Bandwaage 9 und das Transportband 10 in einer vorbestimmten Gewichtsmenge pro Sekunde in den Auffangtrichter 17 eingeführt.

Parallel dazu wurden in den beheizten Schmelzkessel 11 bei stehendem Rührwerk 100 kg eines im wesentlichen gesättigten Erdöl-Kohlenwasserstoffharzes mit einem Molekulargewicht zwischen 1000 und 2000 und einem Erweichungspunkt zwischen 90 °C und 110 °C, 50 kg ataktischem Polypropylen, 100 kg Rutil und 50 kg eines alterungsbeständigen Raffinatöls mit einem spezifischen Gewicht bei 15 °C von 0,88, einer Viskosität bei 50 °C von 54,2 Pa s, einer einer Viskosität bei 100 °C von 9,3 Pa s und einem Flammpunkt (offen) von 260 °C sowie einem Viskositätsindex von 98 eingebracht, bei Temperaturen zwischen 100 und 140 °C aufgeschmolzen und durchmischt. Die Schmelze wurde über die Umwälzpumpe 12 und den statischen Mischer 13 im Kreislauf umgewälzt, um eine Desagglomeration des Rutils und einen Aufschluß des ataktischen Polypropylens zu erreichen. Nach gründlichem Homogenisieren der schmelzflüssigen, pigmenthaltigen Bindemittelmischung wurde durch Umschalten der Umwälzpumpe 12 ein definierter Bindemittelstrom der Zerlegungsvorrichtung 14 zugeführt. In dieser gelangte die schmelzflüssige Bindemittelmischung über eine Vielzahl horizontaler Zuführkanäle in zugeordnete Ausblaskammern sehr kleiner Abmessungen, aus denen sie durch über oberseitige Druckgasöffnungen intermittierend einwirkende Druckgasimpulse in Form einer Querreihe erbsengroßer tropfenartiger Bindemittelteilchen auf das darunter mit vorbestimmter Geschwindigkeit umlaufende Transportband 15 aufgetragen wurde. Die Aufeinanderfolge der Druckgasimpulse und die Vorschubgeschwindigkeit des Transportbandes 15 waren so aufeinander abgestimmt, daß jede auf das Transportband aufgebrachte Querreihe beabstandeter tropfenartiger Teilchen vor dem Aufbringen der nächsten Querreihe um eine solche Strecke mit dem Transportband weiterbewegt wurde, daß die tropfenartigen Teilchen sich nirgends berührten. Auf dem Transportband 15 wurden die tropfenartigen Teilchen gekühlt, bis sie zu pastillenartigen Teilchen erstarrt waren. Diese wurden dann mittels der Vorrichtung 16 mit Kalksteinmehl bepudert und in einem Gewichtsverhältnis Bindemittelteilchen: der vom Transportband 10 zugeführten Mischung aus Glasperlen, Quarzmehl und Quarzsand von 30 : 70 über den Auffangtrichter 17 in den Mischer 18 eingebracht und dann in einer üblichen Absackanlage in Polyethylensäcke abgefüllt. Die so erhaltene, abgepackte Markierungs-Pulvermasse zeigte in allen Säcken gleichmäßige Zusammensetzung und konnte auf der Baustelle durch einfaches Einwerfen des ganzen Sackes in den Baustellenkocher ohne zusätzliches Aufschließen verarbeitet werden.

Das vorstehend anhand bevorzugter Ausführungsformen beschriebene Markierungsmaterial sowie die Verfahren und Vorrichtungen zu dessen Herstellung können vom Fachmann je nach den Anforderugen des Einzelfalles in verschiedener Weise zweckentsprechend abgewandelt werden, sofern dabei das erfindungswesentliche Merkmal erhalten bleibt, daß das Bindemittel im wesentlichen in Form getrennt erstarrter Teilchen einer schmelzflüssig aufgeschlossenen, pigmenthaltigen Mischung der Bindemittelkomponenten vorliegt.

**Patentansprüche**

1. Verfahren zur Herstellung eines rieselfähigen Markierungsmaterials für Verkehrsflächen, bei welchem man ein in der Hitze fließfähiges Bindemittel mit einem Gehalt an Natur- und/oder Kunstharz sowie gegebenenfalls Weichmacher und/oder Elastomeren in schmelzflüssiger Form mit Pigment vermischt und die erhaltene pigmenthaltige Bindemittelmischung in vorbestimmtem Mengenverhältnis mit einer getrennt erzeugten Zuschlagmischung aus mineralischen Stoffen sowie gegebenenfalls Glasperlen vermischt, **dadurch gekennzeichnet,** daß man die schmelzflüssige pigmenthaltige Bindemittelmischung durch Gasstrahlimpulse in eine Vielzahl tropfenartiger Teilchen überführt, diese getrennt zu pastillenartigen Teilchen erstarren läßt und diese mit der Zuschlag-Mischung vermischt.

2. Verfahren nach Anspruch 1, **dadurch gekennzeichnet,** daß man die schmelzflüssige, pigmenthaltige Bindemittelmischung vor der Zerlegung in Tröpfchen zur Desagglomeration des Pigments und zum Aufschließen etwaiger elastomerer und/oder plastomerer Bindemittelkomponenten für eine vorbestimmte Zeitdauer unter der Einwirkung hinreichender Scherkräfte umwälzt.

3. Verfahren nach Anspruch 1 oder 2, **dadurch gekennzeichnet,** daß man die schmelzflüssige, pigmenthaltige Bindemittelmischung durch eine Vielzahl von Austrittsöffnungen gleichen Durchmessers direkt in Form einer Vielzahl getrennter, tropfenartiger Teilmengen auf eine mit vorbestimmter Relativgeschwindigkeit vorbeibewegte Aufnahmefläche aufbringt.

4. Verfahren nach einem der Ansprüche 1 bis 3, **dadurch gekennzeichnet,** daß man die tropfenartigen Teilchen auf der Aufnahmefläche bis zum Erstarren zu pastillenartigen Teilchen kühlt.

5. Verfahren nach einem der Ansprüche 1 bis 4, **dadurch gekennzeichnet,** daß man die erstarrten pastillenartigen Teilchen mit einem deren Haftneigung herabsetzenden Pulver bepudert.

6. Verfahren nach einem der Ansprüche 1 bis 5, **dadurch gekennzeichnet,** daß man die erstarrten pastillenartigen Teilchen mit einer aus den mineralischen Füll- und Zuschlagstoffen sowie gegebenenfalls Glasperlen getrennt erzeugten Mischung vermischt und gegebenenfalls abpackt.

7. Verfahren nach einem der Ansprüche 1 bis 6, **dadurch gekennzeichnet,** daß man die aus den Füll- und Zuschlagstoffen und gegebenenfalls Glasperlen erzeugte Mischung mit einer entmischungshemmenden, oberflächenaktiven Flüssigkeit behandelt.

8. Vorrichtung zur Herstellung eines rieselfähigen Markierungsmaterials für Verkehrsflächen, mit einem beheizbaren Schmelzkessel zum Vermischen von thermoplastischen oder fließfähigen Bindemittel-Komponenten miteinander und mit Pigment, Vorrichtungen zum Vermischen mineralischer Füll-und/oder Zuschlagstoffe, Vorrichtungen zum Vermischen der mineralischen Full- und/oder Zuschlagstoffe mit dem pigmenthaltigen Bindemittel sowie gegebenenfalls Vorrichtungen zum portionierten Abpacken des erhaltenen Markierungsmaterials, **gekennzeichnet durch:**
   a) eine dem Schmelzkessel (11) nachgeschaltete Vorrichtung (14) zur Zerlegung der schmelzflüssigen, pigmenthaltigen Bindemittelmischung in getrennte tropfenartige Teilchen, wobei die Vorrichtung (14) zur Zerlegung der schmelzflüssigen pigmenthaltigen Bindemittelmischung mindestens eine Austrittsöffnung vorbestimmten Durchmessers, Vorrichtungen zur Erzeugung von auf die austretende Mischung einwirkenden Gasstrahlimpulsen zur Erzeugung einzelner tropfenartiger Teilchen sowie eine Aufnahmefläche (15) zur getrennten Aufnahme derselben aufweist,
   b) eine nachgeschaltete Vorrichtung (15) zum Verfestigen der tropfenartigen Teilchen durch Abkühlung zu pastillenartigen Teilchen und

c) Vorrichtungen (18) zum dosierten Vermischen der erstarrten pastillenartigen Teilchen aus pigmenthaltigem Bindemittel mit der Mischung der Füll- und Zuschlagstoffe.

9. Vorrichtung nach Anspruch 8, **dadurch gekennzeichnet**, daß der Schmelzkessel (11) mit Vorrichtungen (12) zum Umwälzen der schmelzflüssigen, pigmenthaltigen Bindemittelmischung sowie Vorrichtungen (13) zur Erzeugung hinreichender Scherkräfte in der umgewälzten Mischung versehen ist.

10. Vorrichtung nach Anspruch 8 oder 9, **dadurch gekennzeichnet,** daß Kühlvorrichtungen zum Kühlen der auf der Aufnahmefläche (15) befindlichen tropfenartigen Teilchen vorgesehen sind.

11. Vorrichtung nach einem der Ansprüche 8 bis 10, **gekennzeichnet durch** Vorrichtungen (16) zum Bepudern der erstarrten pastillenartigen Teilchen.

12. Vorrichtung nach einem der Ansprüche 8 bis 11, **dadurch gekennzeichnet,** daß zusätzlich Vorrichtungen (7) zum Besprühen der getrennt erzeugten Mischung aus mineralischen Füll- und/oder Zuschlagstoffen und gegebenenfalls Glasperlen mit einer entmischungshemmenden oberflächenaktiven Flüssigkeit vorgesehen sind.

## Claims

1. Process for the production of a pourable marking material for traffic areas, in which a binder which is fluid on heating, with a content of natural and/or synthetic resin and possibly plasticizers and/or elastomers, is mixed in the molten form with pigment and the pigment-containing binder mixture obtained is mixed in a predetermined proportion with a separately produced mixed loading material of mineral substances and possibly glass beads, characterized in that the molten pigment-containing binder mixture is converted by gas jet pulses into a large number of droplike particles, these are allowed to solidify separately to pastille-like particles and these are mixed with the mixed loading material.

2. Process according to Claim 1, characterized in that the molten, pigment-containing binder mixture, before being dispersed into droplets, is circulated for a predetermined time under the effect of sufficient shearing forces to deagglomerate the pigment and to digest any elastomeric and/or plastomeric binder components.

3. Process according to Claim 1 or 2, characterized in that the molten, pigment-containing binder mixture is deposited through a large number of openings of equal diameter in the form of a large number of separate droplike portions directly onto a receiving surface moving past at a predetermined relative speed.

4. Process according to one of Claims 1 to 3, characterized in that the droplike particles are cooled on the receiving surface until solidifying to pastille-like particles.

5. Process according to one of Claims 1 to 4, characterized in that the solidified pastille-like particles are dusted with a powder reducing their tendency to adhere.

6. Process according to one of Claims 1 to 5, characterized in that the solidified pastille-like particles are mixed with a separately produced mixture of the mineral fillers and loading materials and possibly glass beads and if necessary packed.

7. Process according to one of Claims 1 to 6, characterized in that the mixture produced from the fillers and loading materials and possibly glass beads is treated with a surface-active liquid inhibiting segregation.

8. Device for the production of a pourable marking material for traffic areas, with a heatable melting pot for mixing thermoplastic or fluid binder components with each other and with pigment, devices for mixing mineral fillers and/or loading materials, devices for mixing the mineral fillers and/or loading materials with the pigment-containing binder, and if necessary devices for the packing in portions of the marking material obtained, characterized by:

(a) a device (14) coupled downstream of the melting pot (11) for dispersion of the molten, pigment-containing, binder mixture into separate droplike particles, the device (14) having at least one outlet opening of predetermined diameter, devices to produce gas jet pulses acting on the emergent mixture for the production of individual droplike particles, and a receiving surface (15) for separately receiving the latter,

(b) a device (15) coupled downstream for solidifying the droplike particles by cooling to pastille-like particles and

(c) devices (18) for the metered mixing of the solidified pastille-like particles of pigment-containing binder with the mixture of fillers and loading materials.

9. Device according to Claim 8, characterized in that the melting pot (11) is provided with devices (12) for circulating the molten pigment-containing binder mixture as well as devices (13) for producing sufficient shearing forces in the circulated mixture.

10. Device according to Claim 8 or 9, characterized in that cooling devices are provided for cooling the droplike particles lying on the receiving surface (15).

11. Device according to one of Claims 8 to 10, characterized by devices (16) for dusting the solidified pastille-like particles.

12. Device according to one of Claims 8 to 11, characterized in that in addition devices (7) are provided for spraying the separately produced mixture of mineral fillers and/or loading materials and possibly glass beads with a surface-active liquid inhibiting segregation.

## Revendications

1. Procédé de fabrication d'un matériau de marquage, susceptible d'être épandu, pour aires de circulation, dans lequel on mélange avec du pigment, une matière agglutinante, susceptible de couler en chauffant, avec une charge de résine naturelle ou synthétique ainsi qu'avec le cas échéant un ramollissant et/ou des élastomères sous forme fondue liquéfiée et l'on mélange le mélange de matière agglutinante, contenant des pigments, ainsi obtenu, dans une proportion déterminée, avec un mélange additionnel, produit séparément, se composant de matières minérales ainsi que le cas échéant de perles de verre, caractérisé en ce que l'on transforme le mélange de matière agglutinante contenant des pigments et liquéfié par fusion au moyen de jets de gaz par impulsion en un très grand nombre de particules en forme de gouttes, qui se figent séparément en particules en forme de pastilles et en mélangeant celles-ci avec le mélange additionnel.

2. Procédé selon la revendication 1, caractérisé en ce que l'on malaxe le mélange de matière agglutinante, chargé en pigments, liquéfié par fusion, avant son fractionnement en gouttelettes de façon à disperser le pigment et à soumettre pendant un temps prédéterminé à l'action de forces de déchiquetage suffisantes des composants de la matière agglutinante éventuellement du type élastomère et/ou plastomère.

3. Procédé selon les revendications 1 ou 2, caractérisé en ce que l'on déverse le mélange de matière agglutinante, liquéfié par fusion, sur une surface de réception avançant avec une vitesse relative prédéterminée, en le faisant passer à travers un grand nombre d'orifices de sortie de même diamètre sous forme d'un grand nombre de particules élémentaires, en forme de gouttes.

4. Procédé selon l'une des revendications 1 à 3, caractérisé en ce que l'on refroidit les particules en forme de gouttes sur la surface de réception jusqu' à ce qu'elles se figent en particules en forme de pastilles.

5. Procédé selon l'une des revendications 1 à 4, caractérisé en ce que l'on poudre les particules figées en forme de pastille avec une poudre réduisant leur propension à coller.

6. Procédé selon l'une des revendications 1 à 5, caractérisé en ce que l'on mélange les particules figées, en forme de pastilles, avec un mélange produit séparément se composant des charges et matières minérales additionnelles ainsi que le cas échéant de perles de verre et qu'on les ensache le cas échéant.

7. Procédé selon l'une des revendications 1 à 6, caractérisé en ce que le mélange produit à partir des charges et matières additionnelles et le cas échéant de perles de verre est traité avec un liquide tensio-actif, empêchant sa ségrégation.

8. Dispositif pour la fabrication d'un matériau de marquage susceptible d'être épandu, pour aires de circulation, avec un creuset de fusion pouvant être chauffé pour mélanger ensemble et avec des pigments des composants d'une matière agglutinante thermoplastique ou susceptible de couler, dispositif pour le mélange de charges et/ou des matières additionnelles minérales avec la matière agglutinante contenant des pigments ainsi que le cas échéant dispositif pour l'ensachage par quantités prédéterminées du matériau de marquage ainsi obtenu, caractérisé par :

a) un dispositif (14) installé en aval du creuset de fusion (11) pour la désagrégation du mélange de matière agglutinante liquide fondant, et contenant des pigments, en particules séparées en forme de gouttes, lequel dispositif (14) pour l'émiettement du mélange de matière agglutinante liquéfiée par fusion et contenant des pigments comprend au moins un orifice de sortie de diamètre prédéterminé, des dispositifs pour la production de jets de gaz par impulsion agissant sur le mélange en train de sortir en vue de produire des particules élémentaires en forme de gouttes, ainsi qu'une surface de réception (15) pour recevoir séparément lesdites particules.

b) un dispositif (15) ; monté à la suite pour durcirles particules en forme de gouttes par refroidissement jusqu'à ce qu'elles deviennent des particules en forme de pastilles, et

c) des dispositifs (18) pour le mélange dosé des particules figées en forme de pastilles provenant de la matière agglutinante contenant des pigments avec le mélange des charges et matières additionnelles.

9. Dispositif selon la revendication 8, caractérisé en ce que le creuset de fusion (11) est pourvu de dispositifs (12) servant à faire circuler le mélange de matière agglutinante liquéfié par fusion et contenant des pigments ainsi que de dispositifs (13) servant à produire des forces de déchiquetage suffisantes dans le mélange en circulation.

10. Dispositif selon la revendication 8 ou la revendication 9, caractérisé en ce que des dispositifs de refroidissement sont prévus pour refroidir les particules en forme de gouttes se trouvant sur la surface de réception (15).

11. Dispositif selon l'une des revendications 8 à 10, caractérisé par des dispositifs (16) servant à poudrer les particules figées en forme de pastilles.

12. Dispositif selon l'une des revendications 8 à 11, caractérisé en ce que des dispositifs additionnels (7) sont prévus pour pulvériser sur le mélange produit séparément se composant de charges et/ou matières additionnelles minérales et le cas échéant de perles de verre avec un liquide tensioactif empêchant leur désagrégation.

EP 0 305 679 B1